# EUROPÄISCHE PATENTANMELDUNG

(11) **EP 2 930 696 A1**
(43) Veröffentlichungstag der Anmeldung: **14.10.2015**
(21) Anmeldenummer: 14164223.1
(22) Anmeldetag: 10.04.2014
(51) Int. Cl.: G07B 15/04, G07C 1/30

(54) **Verfahren zur Erfassung und Bezahlung von Parkvorgängen**

(71) Anmelder: Scheidt & Bachmann GmbH, 41238 Mönchengladbach (DE)
(72) Erfinder: Grote, Karl, 40670 Meerbusch (DE)
(74) Vertreter: Stenger Watzke Ring

(57) **Zusammenfassung**

Die Erfindung betrifft ein Verfahren zur Erfassung und Bezahlung von Parkvorgängen in Parkeinrichtungen, wobei ein Nutzer beim Einfahren in und Ausfahren aus der Parkeinrichtung eine Einfahrtkennung (501) bzw. Ausfahrtkennung (502) mittels eines mobilen Endgerätes (400) von einer der Einfahrt (100) bzw. Ausfahrt (800) zugeordneten Einfahrtkontrolleinrichtung (101) bzw. Ausfahrtkontrolleinrichtung (801) ausliest, wobei beim Einfahren die Einfahrtkennung (501) von dem mobilen Endgerät (400) an ein Hintergrundsystem (300) übermittelt wird, wobei die Einfahrtkennung (501) in einem Speicher (401) des mobilen Endgerätes (400) oder gemeinsam mit einer Kennung des mobilen Endgerätes (400) in einem Speicher des Hintergrundsystems (300) gespeichert wird, wobei beim Ausfahren die Einfahrtkennung (501) und Ausfahrtkennung (502) oder die Kennung des mobilen Endgerätes (400) und die Ausfahrtkennung (502) von dem mobilen Endgerät (400) an das Hintergrundsystem (300) übermittelt werden, wobei das Hintergrundsystem (300) anhand der Einfahrtkennung (501) und Ausfahrtkennung (502) eine Entgeltberechnung für den Parkvorgang durchführt, und wobei dem Nutzer das Parkentgelt in Rechnung gestellt wird.

## Beschreibung

Die Erfindung betrifft ein Verfahren zur Erfassung und Bezahlung von Parkvorgängen in Parkeinrichtungen.

Gewöhnlich funktionieren die Erfassung und Bezahlung von nicht-registrierten Parkvorgängen in Parkeinrichtungen so, dass ein Nutzer beim Einfahren in die Parkeinrichtung an einem Parkticketgeber ein Kurzparkerticket entnimmt und nach Öffnen einer Einfahrtschranke oder Freigabe einer Ampel in die Parkeinrichtung einfährt. Vor Verlassen der Parkeinrichtung führt der Nutzer das Kurzparkerticket in einen Kassenautomaten ein, wo das Ticket gelesen und die Höhe des zu entrichtenden Parkentgeltes ermittelt wird. Daraufhin bezahlt der Nutzer das Parkentgelt und fährt innerhalb eines vorgegebenen Zeitraums, typischerweise innerhalb von 15 Minuten, über eine Ausfahrt aus der Parkeinrichtung aus. Typischerweise sind die verwendeten Kurzparkertickets mit Magnetstreifen oder Barcode versehene Papiertickets. Alternativ kommen auch Transpondermünzen zur Anwendung. Wesentliches Merkmal eines Kurzparkertickets ist, dass die Nutzeridentität nicht registriert wird.

Darüber hinaus können zumeist auch sogenannte "Langzeitparker" die Parkeinrichtung nutzen. Dabei werden in einem dem Parkhausbetreiber zugeordneten Hintergrundsystem die Bankverbindung und/oder die Rechnungsadresse des jeweiligen Langzeitparkers hinterlegt. Der Langzeitparker erhält in der Regel einen eigenen Nutzerausweis, der ihm Zugang zum Parkhaus gewährt, solange er als Langzeitparker registriert ist.

Zur Vereinfachung der Erfassung und Bezahlung von Parkvorgängen wurden im Stand der Technik bereits vielfältige Anstrengungen unternommen. Der Grundgedanke beruht darauf, Erfassungs- und Zahlungsvorgänge mittels eines mobilen Endgerätes durchzuführen, welches der Nutzer in den meisten Fällen ohnehin mit sich trägt.

Mobile Endgeräte werden im Stand der Technik bereits genutzt, um Waren zu erwerben und/oder zu bezahlen. Dies erfolgt beispielsweise mittels eines sogenannten QR-Codes. Dabei wird - unter Inanspruchnahme des Services eines entsprechenden Zahlungsdienstleisters - beispielsweise ein Artikel von einem Werbeplakat gekauft und bezahlt, indem ein zu dem jeweiligen Artikel gehörender QR-Code mit einem mobilen Endgerät des Nutzers eingescannt wird. Der QR-Code beinhaltet einen Hyperlink auf ein Webportal des Verkäufers. Dort kann der Nutzer seinen Kauf bestätigen und damit die jeweilige Ware kostenpflichtig bestellen. Zum Bezahlen wird der Nutzer beispielsweise auf ein Webportal eines Zahlungsdienstleisters weitergeleitet, wo er eine entsprechende Zahlung für die Ware vornehmen kann. Die Zahlung kann beispielsweise mittels der Nutzung eines virtuellen Kontos, einer Kreditkarte oder auch einer EC-Karte erfolgen, und in der Regel ist der Nutzer beim Zahlungsdienstleister namentlich und mit Konto- oder Kreditkartenverbindung registriert. Der Zahlungsdienstleister übermittelt anschließend eine Zahlungsbestätigung an den Verkäufer. Nach abgeschlossener Zahlungstransaktion erfolgt dann der Versand der Ware. Ein entsprechendes Verfahren ist beispielsweise in der Druckschrift WO 2013/144930 A1 beschrieben.

Die US 2013/110727 A1 beschreibt alternativ ein Verfahren, bei welchem eine Verkaufsplattform - nach der Wahl einer Ware durch den Nutzer - einen Zahlungsdienstleister kontaktiert und von diesem einen der ausgewählten Ware zugeordneten QR-Code erhält. Der Nutzer scannt mittels seines Smartphones den auf dem Webportal der Verkaufsplattform abgebildeten QR-Code und leitet diesen an den Zahlungsdienstleister weiter. Für die Bezahlung der Ware werden zuvor hinterlegte Zahlungsinformationen des Nutzers herangezogen. Die Verkaufsplattform wird anschließend von dem Zahlungsdienstleister über die erfolgte Zahlung informiert.

Weiterhin sind im Stand der Technik auch Verfahren zur Erfassung und Bezahlung von Parkvorgängen mittels eines Smartphones bekannt. Die Druckschrift US 2012/234906 A1 offenbart beispielsweise ein Verfahren, bei welchem ein Nutzer einen an einer Parkuhr angebrachten statischen QR-Code mittels seines Smartphones scannt. Der gescannte QR-Code wird anschließend verwendet, um den Parkvorgang mittels eines Webportals eines Zahlungsdienstleisters zu bezahlen. Gemäß einer ersten Ausführungsform zahlt der Nutzer ein für eine im Voraus bestimmte Zeitspanne notwendiges Parkentgelt. Bei absehbarem Ablauf dieser Zeitspanne kann der Nutzer vorteilhaft eine Nachricht auf sein mobiles Endgerät erhalten, woraufhin er entweder Parkzeit nachlösen kann oder bei Erreichen der Höchstparkdauer den Parkbereich zu verlassen hat. Gemäß einer alternativen Ausführungsform registriert sich der Nutzer ohne eine Vorauszahlung an der Parkuhr. Die Bezahlung für die in Anspruch genommene Parkzeit erfolgt erst nach der Beendigung des Parkvorgangs. Dabei bezahlt der Nutzer lediglich die Zeit, die er tatsächlich in Anspruch genommen hat.

Obwohl sich das vorgenannte System für Parkuhren bewährt hat, ist dieses nicht auf Parkeinrichtungen wie beispielsweise Parkhäuser anwendbar. Entgegen der Situation an einer Parkuhr ist es in Parkhäusern nicht bekannt, welchen Parkbereich der Nutzer für sein Fahrzeug in Anspruch nehmen wird. Es ist darüber hinaus nicht vorgesehen, für jede Parkfläche innerhalb des Parkhauses eine kostenintensive Parkuhr bereitzustellen, welche während der jeweiligen Zeitspanne des Parkvorgangs mitläuft. Selbst abstrahierte Systeme würden an jedem einzelnen Parkplatz erforderlich sein, was unwirtschaftlich ist.

Obwohl die Zahlung mittels Zahlungsdienstleister über ein mobiles Endgerät etabliert ist, funktionieren diese Zahnungen nur für die Abwicklung von solchen Verkäufen, bei denen zum Zeitpunkt der Eingehung des Vertragsverhältnisses zwischen Verkäufer und Käufer die Leistung (Übereignung der Kaufware / Ausführung einer Dienstleistung) und die Gegenleistung (Zahlung des Kaufpreises) bereits feststehen. Für ein solches Geschäft sind die auszutauschenden Leistungen statisch. Hingegen ein Parkvorgang ein Dauergeschäft, d.h. es hat den Charakter eines Mietvertrages, bei dem bei Eingehung des Vertragsverhältnisses zwischen Vermieter (Parkhausbetreiber) und Mieter (Parkkunde) die Leistung (Gebrauchsüberlassung des Parkplatzes) und Gegenleistung (Entrichtung der Gebühr nach Tarif) nur dem Grunde nach vereinbart werden. Erst durch das Ausfahren bestimmt der Kunde die Dauer des Mietverhältnisses und damit die Höhe der zu entrichtenden Gebühr. Eine Zahlung mittels Zahlungsdienstleister über ein mobiles Endgerät, ist also bei Parkvorgängen nur dann möglich, wenn ein Verfahren zur Anwendung kommt, das Anfang und Ende des Vertragsverhältnisses erfassen und auf Grundlage der ermittelten Dauer des Geschäfts den Preis konkretisieren und eine Gesamtabrechnung erstellen kann, so dass sich das Dauergeschäft letztlich für den

Zahlungsdienstleister wie ein Kaufvorgang darstellt.

Es ist somit Aufgabe der vorliegenden Erfindung, ein für den Nutzer komfortables Verfahren zur Erfassung und Bezahlung von Parkvorgängen in Parkeinrichtungen zu schaffen, welches innerhalb einer Parkeinrichtung (z. B. Parkhaus) zeitgleich und mit möglichst geringem apparativem Aufwand für eine Vielzahl von parkenden Fahrzeugen anwendbar ist.

Darüber hinaus soll das Verfahren ebenfalls geeignet sein, eine bargeldlose Zahlung mittels eines Zahlungsdienstleisters, welche über ein mobiles Endgerät, wie z.B. ein Smartphone, abgewickelt wird, in den zeitlich verteilten Ablauf von Einfahrt, Bezahlung und Ausfahrt in einem Parkhaus zu integrieren und dabei die Ermittlung eines konkreten Kaufpreises aus dem zeitlich variablen Parkvorgang technisch zu ermöglichen.

Zur technischen Lösung wird mit der Erfindung ein Verfahren mit den Merkmalen des Patentanspruches 1 vorgeschlagen. Weitere Vorteile und Merkmale ergeben sich aus den Unteransprüchen.

Die Erfindung schlägt ein Verfahren zur Erfassung und Bezahlung von Parkvorgängen in Parkeinrichtungen vor, bei welchem ein Nutzer beim Einfahren in und Ausfahren aus der Parkeinrichtung eine Einfahrtkennung beziehungsweise Ausfahrtkennung mittels eines mobilen Endgerätes von einer der Einfahrt beziehungsweise Ausfahrt zugeordneten Einfahrtkontrolleinrichtung beziehungsweise Ausfahrtkontrolleinrichtung ausliest, wobei beim Einfahren die Einfahrtkennung von dem mobilen Endgerät gespeichert und/oder an ein Hintergrundsystem übermittelt wird, wobei die Einfahrtkennung in einem Speicher des mobilen Endgerätes oder gemeinsam mit einer Kennung des mobilen Endgerätes in einem Speicher des Hintergrundsystems gespeichert wird, wobei beim Ausfahren die Einfahrtkennung und Ausfahrtkennung oder die Kennung des mobilen Endgerätes und die Ausfahrtkennung von dem mobilen Endgerät an das Hintergrundsystem übermittelt werden, wobei das Hintergrundsystem anhand der Einfahrtkennung und Ausfahrtkennung eine Entgeltberechnung für den Parkvorgang durchführt.

Die Bezeichnung "Parkeinrichtung" im Sinne der Erfindung bezeichnet alle Parkeinrichtungen für Straßenfahrzeuge, deren Einfahrten und Ausfahrten im Normalfall gesperrt sind und von automatischen Parksystemen kontrolliert werden. Solche Parkeinrichtungen sind beispielsweise Parkhäuser, Parkplätze, Garagen, Tiefgaragen oder Ähnliches. Eine Parkeinrichtung in diesem Sinne hat wenigstens eine Einfahrt und wenigstens eine Ausfahrt. Die Einfahrt zu der Parkeinrichtung ist regelmäßig mit einem Sperrmittel ausgestattet, welches unter bestimmten Bedingungen die Zufahrt in die Parkeinrichtung freigibt. Für eine typische Parkeinrichtung ist dies eine Einfahrtschranke mitsamt Antrieb und einem Kontrollsystem mit Lese- und/oder Ausgabemöglichkeit für Parktickets. Das verwendete Sperrmittel kann auch ein Rolltor, ein Schwenktor, ein versenkbarer Poller oder ähnliches sein. Desweiteren gibt es unbeschrankte Parkeinrichtungen, deren Einfahrten beziehungsweise Ausfahrten in der Regel durch Kameras mit Nummernschilderfassung gesichert sind. Mit Hilfe der Nummernschilderfassung kann ein Fahrzeug, welches unbezahlt aus der Parkeinrichtung ausfährt, erfasst werden, und dem Nutzer kann im Nachhinein das angefallene Parkentgelt in Rechnung gestellt werden. Solche unbeschrankten Parkeinrichtungen verfügen beispielsweise über eine Ampelschaltung (Rot/Grün), mittels welcher die Ein- und/oder Ausfahrt gesperrt wird. Im Sinne der Erfindung werden solche Parkeinrichtungen mit herkömmlichen beschrankten Parkeinrichtungen gleichgesetzt.

Gemäß der Erfindung wird an der Einfahrtskontrolleinrichtung und an der Ausfahrtskontrolleinrichtung eine Einfahrt- bzw. Ausfahrtkennung datentechnisch bereitgestellt, derart dass der Nutzer - also der Fahrer des zu parkenden Fahrzeugs - die Kennung mittels eines mobilen Endgeräts einlesen kann. Die in der Kennung enthaltenen Daten sind dabei wenigstens teilweise zeitlich veränderlich und enthalten das aktuelle Datum und die aktuelle Uhrzeit und eine systemweite eineindeutige Kennung der Parkeinrichtung und eine Kennung einer Ein- oder Ausfahrt der Parkeinrichtung und/oder einen Hyperlink auf ein Webportal des Hintergrundsystems.

Gemäß der Erfindung verwendet der Nutzer sowohl an der Einfahrt als auch an der Ausfahrt sein mobiles Endgerät, beispielsweise ein Smartphone, um die Einfahrt- bzw. Ausfahrtkennung einzulesen. Zur Erfassung des Beginns des Parkvorgangs wird die Einfahrtkennung von dem mobilen Endgerät an ein Hintergrundsystem übermittelt. Das Hintergrundsystem kann beispielsweise ein System des Betreibers der Parkeinrichtung sein, es kommen jedoch auch Hintergrundsysteme externer Dienstleister in Frage. Die Übermittlung zwischen dem mobilen Endgerät und dem Hintergrundsystem kann entweder die vollständige Übermittlung der Einfahrtkennung beinhalten, oder die lediglich teilweise Übermittlung der Einfahrtkennung, das heißt lediglich eines Teils des Dateninhaltes der Kennung. Die Einfahrtkennung kann einen aus mehreren Bestandteilen bestehenden Dateninhalt aufweisen, wobei das mobile Endgerät den Dateninhalt mittels einer geeigneten Applikation zerlegen kann und dann beispielsweise nur einen Teil der enthaltenen Daten an das Hintergrundsystem übermittelt.

Gemäß einer Variante wird die Einfahrtkennung in einem Speicher des mobilen Endgerätes gespeichert. Beim Ausfahren liest der Nutzer mittels seines mobilen Endgerätes eine Ausfahrtkennung von einer Ausfahrtkontrolleinrichtung ein, welche zusammen mit der in dem Speicher des mobilen Endgerätes hinterlegten Einfahrtkennung an das Hintergrundsystem übermittelt wird.

Alternativ ist es gemäß einer weiteren Variante möglich, dass die Einfahrtkennung zusammen mit einer Kennung des mobilen Endgerätes, beispielsweise einer Gerätenummer oder Telefonnummer, vom mobilen Endgerät an das Hintergrundsystem übermittelt und in einem Speicher des Hintergrundsystems gespeichert wird, wobei beim Ausfahren dann lediglich die Kennung des mobilen Endgerätes mit der Ausfahrtkennung von dem mobilen Endgerät an das Hintergrundsystem übermittelt wird.

Anhand der in Einfahrt- und Ausfahrtkennung enthaltenen Daten führt das Hintergrundsystem bei Erhalt der Ausfahrtkennung eine Berechnung des Parkentgeltes durch. Anschließend wird dem Nutzer das Parkentgelt in Rechnung gestellt, und der Nutzer kann die Parkeinrichtung mit seinem Fahrzeug verlassen.

Durch die Auswertung der in der Einfahrtkennung und Ausfahrtkennung enthaltene Daten wird es möglich, die Parkzeit und somit auch das Parkentgelt zu berechnen. Somit wird es möglich, eine Entgeltberechnung auch für einen bei Einfahrt in die Parkeinrichtung unbestimmten Parkzeitraum vorzunehmen. Anschließend kann das Parkentgelt mittels eines Zahlungsdienstleisters zwischen dem Nutzer und dem Betreiber der Parkeinrichtung verrechnet werden. Ein solcher Zahlungsdienstleister kann z. B. PayPal sein. Auch der Mobilfunkdienstleister, in dessen Netz das mobile Endgerät betrieben wird, kommt für die Zahlungsabwicklung in Betracht.

Die Zahlung des Parkentgeltes mittels eines Zahlungsdienstleisters hat damit den Vorteil, dass ein Nutzer bargeldlos und anonym, das heißt ohne seine Bankdaten dem Parkhausbetreiber mitzuteilen, den Parkvorgang bezahlen kann.

Das vorgeschlagene Verfahren ertüchtigt das mobile Endgerät eines Nutzers als Kurzparkerticket zu fungieren und im Zusammenspiel mit dem Hintergrundsystem und dem Zahlungsdienstleister das Parkentgelt zu ermitteln und abzurechnen. Damit hat das vorgeschlagene Verfahren die weiter Vorteile, dass keinerlei physische Ticketmedien verbraucht werden und der Nutzer darüber hinaus zur Bezahlung des Parkvorgangs nicht gezwungen ist, einen Kassenautomaten aufzusuchen.

Vorteilhaft sieht die Erfindung vor, dass die Einfahrtkennung und/oder Ausfahrtkennung einen QR-Code oder einen Barcode aufweist. Alternativ ist es jedoch auch möglich, eine NFC-Verbindung oder eine Bluetooth-Verbindung zwischen dem mobilen Endgerät und der Einfahrtkontrolleinrichtung beziehungsweise Ausfahrtkontrolleinrichtung herzustellen. Im Falle eines QR-Codes oder Barcodes können Standard-Codescanner auf Smartphones verwendet werden. Die durch die Verwendung eines Standard-Codescanners kann die Netzwerkverbindung zwischen mobilem Endgerät und Hintergrundsystem durch bekannte Standardbrowser hergestellt werden. Letztere haben insbesondere den Vorteil, dass der Nutzer keine für eine bestimmte Parkeinrichtung oder einen bestimmten Betreiber spezifische Applikation auf seinem mobilen Endgerät installieren muss. Gleichwohl ist das Verfahren auch mit spezifischen Applikationen ausführbar.

Besonders bevorzugt ist vorgesehen, dass die Einfahrtkennung/Ausfahrtkennung, das heißt deren Dateninhalt, in der Einfahrtkontrolleinrichtung beziehungsweise der Ausfahrtkontrolleinrichtung generiert und vorteilhaft auf einer Anzeigeeinheit angezeigt wird.

Vorteilhaft ist dabei vorgesehen, dass die Einfahrtkennung und/oder Ausfahrtkennung dann generiert wird, wenn eine Anwesenheit eines Kraftfahrzeugs im Bereich der jeweiligen Kontrolleinrichtung detektiert wird. Insofern wird eine Art Anforderungskontakt zur Generierung der Kennung bereitgestellt. Somit müssen Kennungen nicht mit zeitlich gleichbleibender Wiederholrate generiert werden, sondern nur dann, wenn tatsächlich auch ein Kraftfahrzeug im Bereich der Einfahrt oder Ausfahrt vorhanden ist.

Die Einfahrt der Parkeinrichtung weist vorteilhaft eine Einfahrtkontrolleinrichtung auf, welche datenmäßig mit einem Schrankenantrieb verbunden ist, der eine Einfahrtschranke zwischen einer geschlossenen und einer offenen Position verschwenkt. Die Einfahrtkontrolleinrichtung ist über eine Datenverbindung mit einer Induktionsschleife oder anderen Detektionsmitteln verbunden. Mit Hilfe dieser Detektionsmittel wird detektiert, ob sich ein Fahrzeug vor der Einfahrtschranke befindet oder nicht. Die Detektionsmittel können Ultraschallsensoren, Lichtschranken oder Gewichtssensoren sein. Darüber hinaus sind auch andere Detektionsmittel denkbar.

Desweiteren ist die Einfahrtkontrolleinrichtung über eine Datenverbindung und ein Netzwerk mit einem Hintergrundsystem verbunden, welches unter anderem ein Webportal für einen kontrollierten Nutzerzugriff über Internet und gängige Browser bietet.

Die Einfahrtkontrolleinrichtung weist vorteilhaft eine Anzeigeeinheit auf, die sowohl Mitteilungen für den Nutzer als auch Barcodes anzeigen kann, wobei Barcodes eindimensional, zweidimensional oder auch dreidimensional ausgeführt sein können. Zu den zweidimensionalen Barcodes gehören unter anderen die QR-Codes. Dreidimensionale Codes beinhalten zusätzlich zu der zweidimensionalen Codierung eine Farbcodierung. Ausdrücklich handelt es sich gemäß der Erfindung nicht um statische Barcodes, wie beispielsweise aufgeklebte Print-Barcodes, sondern um zu einem bestimmten Zeitpunkt aktuell generierte Barcodes mit variablem Dateninhalt, die nur für den Moment des Erkennens der Anwesenheit eines Fahrzeugs eine Gültigkeit für den Nutzer und die Parkeinrichtung besitzen. Alternativ zu der Verwendung von Barcodes beziehungsweise QR-Codes kann die Einfahrtkontrolleinrichtung auch, gegebenenfalls zusätzlich, Mittel zur funkbasierten Datenübertragung an ein nutzerbedientes mobiles Endgerät aufweisen. Diese Mittel können beispielsweise eine NFC-Verbindung oder Bluetooth-Verbindung zu dem mobilen Endgerät des Nutzers herstellen, über die der gleiche Informationsinhalt übertragen wird.

Bei Beginn des Parkvorgangs wird gemäß der Erfindung ein vor der Einfahrtschranke stehendes Fahrzeug von den dort angeordneten Detektionsmitteln detektiert. Damit stellt die Einfahrtkontrolleinrichtung die Anwesenheit des Fahrzeugs fest. Daraufhin zeigt die Einfahrtkontrolleinrichtung eine Einfahrtkennung als Barcode oder QR-Code auf ihrer Anzeigeeinheit an oder sie überträgt auf die zuvor erläuterte Art und Weise eine Einfahrtkennung an ein mobiles Endgerät des Nutzers. Der Nutzer liest diese Einfahrtkennung berührungslos mittels seines mobilen Endgerätes. Bevorzugt wird die Einfahrtkennung auf einer Anzeigeeinheit der Einfahrtkontrolleinrichtung dargestellt. Der Nutzer verwendet für den Scanvorgang eine beliebige Standard-Barcode-Scanner-Applikation, welche auf seinem mobilen Endgerät installiert ist. Alternativ kann auch eine für die Parkeinrichtung oder den Parkeinrichtungsbetreiber spezifische Applikation verwendet werden.

Ausgelöst von dem Einlesevorgang und dem in der Einfahrtkennung enthaltenen Hyperlink wird auf dem mobilen Endgerät des Nutzers ein Standard-Internetbrowser geöffnet, welcher das mobile Endgerät über eine Internetverbindung mit dem Hintergrundsystem verbindet. Aus dem Dateninhalt der Einfahrtkennung kann das Hintergrundsystem den Standort des mobilen Endgerätes (Parkeinrichtung und Nummer der Einfahrt) entnehmen. Diese Daten können im Browser des mobilen Endgerätes anzeigt werden. Daraufhin kann der Nutzer beispielsweise bestätigen, dass er in die Parkeinrichtung einfahren möchte. Dies geschieht vorteilhaft indem er im Browser die Aktion "Öffnen der Schranke" anwählt. Gemäß einer alternativen Ausführungsform ist es möglich, die Schranke auch ohne Anwahl durch den Nutzer automatisch zu öffnen. Bei unbeschrankten, beispielsweise durch Kameras gesicherten, Einfahrten regelt eine Rot/Grün-Ampel die Einfahrt eines Fahrzeugs.

Die Daten der Einfahrtkennung können als sogenanntes Entity-Tag (eTag, gemäß http 1.1 Protokoll) im mobilen Endgerät gespeichert werden. Das eTag mit den Daten der Einfahrtkennung ist dem Browser des mobilen Endgerätes zugeordnet und somit auch bei späteren Vorgängen abrufbar. Als Browser können übliche Standardinternetbrowser für mobile Endgeräte verwendet werden. In einer alternativen Ausführungsform kann der Dialog zwischen mobilem Endgerät und Hintergrundsystem jedoch auch über eine für die Parkeinrichtung oder den Betreiber der Parkeinrichtung spezifische Applikation geführt werden. Die Applikation speichert die Daten aus der Einfahrtkennung dann nicht als eTag, sondern als applikationsspezifischen Datensatz in einer Datei oder als Datenbankeintrag in einem Speicher des mobilen Endgerätes.

In einer weiteren Ausführungsform werden die Daten der Einfahrtkennung gar nicht auf dem mobilen Endgerät gespeichert, sondern stattdessen in einem Speicher des Hintergrundsystems. In diesem Fall muss zusammen mit den Daten der Einfahrtkennung auch eine eineindeutige Kennung des mobilen Endgerätes an das Hintergrundsystem übermittelt und dort gespeichert werden. Dadurch können die Daten der Einfahrtkennung bei dem späteren Ausfahrt-Vorgang demselben mobilen Endgerät korrekt zugeordnet werden. Als eineindeutige Kennung des mobilen Endgerätes kann beispielsweise die IMEI

(International Mobile Station Equipment Identity) oder alternativ auch die Telefonnummer oder ein anderer auf dem mobilen Endgerät hinterlegter Schlüssel verwendet werden.

Der Einfahrtvorgang wird dadurch abgeschlossen, dass das Hintergrundsystem über eine Datenverbindung zu genau die Einfahrtkontrolleinrichtung, die zur eingelesenen Einfahrtkennung gehört, veranlasst, ihre Einfahrtschranke zu öffnen oder ihre Ampel von Rot auf Grün zu schalten. Der Nutzer kann sodann mit seinem Fahrzeug in die Parkeinrichtung einfahren.

Bei Beendigung des Parkvorgangs fährt der Nutzers mit seinem Fahrzeug in Richtung der Ausfahrt. Sobald das Fahrzeug in den Erfassungsbereich von im Bereich der Ausfahrtkontrolleinrichtung angeordneten Detektionsmitteln gelangt, wird es von den Detektionsmittein detektiert, und die Anwesenheit des Fahrzeugs wird von der Ausfahrtkontrolleinrichtung fostgostollt. Daraufhin generiert die Ausfahrtkontrolleinrichtung - analog zur Einfahrt - eine Ausfahrtkennung, welche der Nutzer mittels seines mobilen Endgerätes einliest. In einer Variante wird die Ausfahrtkennung vorteilhaft als QR-Code dargestellt. Alternativ können jedoch auch - analog zur Einfahrt - Funkverbindungen, wie beispielsweise NFC-Verbindungen oder Bluetooth-Verbindungen, hergestellt werden. Die von der Ausfahrtkontrolleinrichtung an das mobile Endgerät übermittelte Ausfahrtkennung enthält das Ausfahrtdatum, die Ausfahrtuhrzeit, eine eineindeutige Identifizierung für die Parkeinrichtung und die verwendete Ausfahrt und/oder einen Hyperlink auf das Webportal des Hintergrundsystems. Initiiert durch das Scannen der Ausfahrtkennung mittels des mobilen Endgerätes oder ausgelöst durch den Hyperlink, welcher in der Ausfahrtkennung enthalten ist, wird auf dem mobilen Endgerät ein Internetbrowser geöffnet, der eine Internetverbindung zwischen dem mobilen Endgerät des Nutzers und dem Hintergrundsystem herstellt.

Darüber hinaus werden die Daten der Einfahrtkennung, welche während des Einfahrtvorgangs als eTag im mobilen Endgerät gespeichert wurden, vom Hintergrundsystem aus dem mobilen Endgerät des Nutzers abgerufen, indem sie mittels des Browsers aus dem Speicher des mobilen Endgerätes ausgelesen werden, und an das Hintergrundsystem übermittelt. Das Hintergrundsystem verfügt sodann sowohl über die Daten der Einfahrtkennung als auch über die Daten der Ausfahrtkennung. Aus diesen Daten wird die Parkdauer und daraus die Höhe des zu entrichtenden Parkentgeltes berechnet und als Information von dem Hintergrundsystem an einen Zahlungsdienstleister weitergeleitet. Vorteilhaft geschieht diese Datenweiterleitung indem die Internetverbindung des Browsers des mobilen Endgerätes über eine URL-Redirect-Funktion vom Hintergrundsystem auf den Server des Zahlungsdienstleisters weitergeleitet wird. Abhängig von der Auslastung des Hintergrundsystems und der Netzwerkverbindungen ist es dabei möglich, dass das Weiterleiten der Internetverbindung von dem Hintergrundsystem auf den Server des Zahlungsdienstleisters so schnell geschieht, dass der Nutzer die Internetseite des Hintergrundsystems gar nicht angezeigt bekommt. Der Nutzer hat dann den Eindruck, dass er unmittelbar mit dem Server des Zahlungsdienstleisters verbunden wird, während rein technisch zunächst eine Verbindung zwischen dem mobilen Endgerät und dem Hintergrundsystem hergestellt wird (zur Preisberechnung) und die Verbindung erst dann an den Zahlungsdienstleister weitergeleitet wird, so dass eine Verbindung zwischen dem mobilen Endgerät und dem Server des Zahlungsdienstleisters besteht.

In einer weiteren Variante wird die Verbindung zwischen dem mobilen Endgerät und dem Hintergrundsystem nicht über einen Browser des mobilen Endgerätes hergestellt, sondern über eine für die Parkeinrichtung oder den Betreiber der Parkeinrichtung spezifische Applikation, welche die Daten der Ausfahrtkennung und die zuvor bei der Einfahrt gespeicherten Daten der Einfahrtkennung an das Hintergrundsystem weiterleitet.

Alternativ ist es auch möglich, die Daten aus der Einfahrtkennung nicht auf dem mobilen Endgerät, sondern - zusammen mit dem eineindeutigen Code des mobilen Endgerätes - auf einem Server des Hintergrundsystems zu speichern. In diesem Fall übermittelt das mobile Endgerät bei der Ausfahrt nur die Daten der Ausfahrtkennung und die Kennung des mobilen Endgerätes von dem mobilen Endgerät an das Hintergrundsystem. Mittels der eineindeutigen Kennung des Endgerätes und der in Einfahrts- und Ausfahrtkennung enthaltenen eineindeutigen Kennung der Parkeinrichtung ermittelt das Hintergrundsystem die zugehörige Einfahrtkennung, berechnet das zu entrichtende Parkentgelt und leitet eine Information über die Höhe des Parkentgeltes über eine Datenverbindung an den Server des Zahlungsdienstleisters weiter.

Nach der Preisberechnung am Hintergrundsystem und der Weiterleitung auf den Zahlungsdienstleister liegt dem Server des Zahlungsdienstleisters eine Information über die Höhe des von dem Hintergrundsystem berechneten Parkentgeltes vor. Ebenso ist die Datenverbindung des Browsers des mobilen Endgerätes über eine URL-Redirect-Funktion auf den Server des Zahlungsdienstleisters weitergeleitet. Das mobile Endgerät kann dann verwendet werden, um den Zahlungsvorgang an den Server des Zahlungsdienstleisters zu bestätigen. Der Ablauf der Bestätigung ist abhängig von den besonderen Verfahren des jeweiligen Zahlungsdienstleisters. Beispielsweise hat der Nutzer die Zahlung durch Eingabe eines Passworts zu bestätigen. Es sind aber auch andere Arten der Zahlungsbestätigung möglich, wie zum Beispiel eine einfache Bestätigung durch die Betätigung einer "Ok"-Taste oder dergleichen. Nach Bestätigung der Zahlung teilt der Server des Zahlungsdienstleisters dem Hintergrundsystem per Datendialog die Bestätigung der Zahlung mit.

Der Ausfahrtvorgang wird dadurch abgeschlossen, dass das Hintergrundsystem nach der Zahlungsbestätigung über eine Datenverbindung genau die Ausfahrtkontrolleinrichtung, die zur eingelesenen Ausfahrtkennung gehört, veranlasst, ihre Ausfahrtschranke zu öffnen oder ihre Ampel von "Rot" auf "Grün" zu schalten.

Aus Gründen des Datenschutzes kann es vorgesehen sein, die für die Preisermittlung verwendeten eTags oder Datensätze aus dem Hintergrundsystem zu löschen. Das Löschen oder Beibehalten der eTags auf dem mobilen Endgerät obliegt dem Nutzer selbst.

Im Folgenden wird die Erfindung anhand eines Ausführungsbeispiels näher erläutert. Es zeigen:
- Figuren 1 bis 4:: Verfahrensschritte bei der Einfahrt in eine Parkeinrichtung,
- Figuren 5 bis 9:: Verfahrensschritte bei der Ausfahrt aus der Parkeinrichtung

Im Einzelnen zeigen die Figuren:

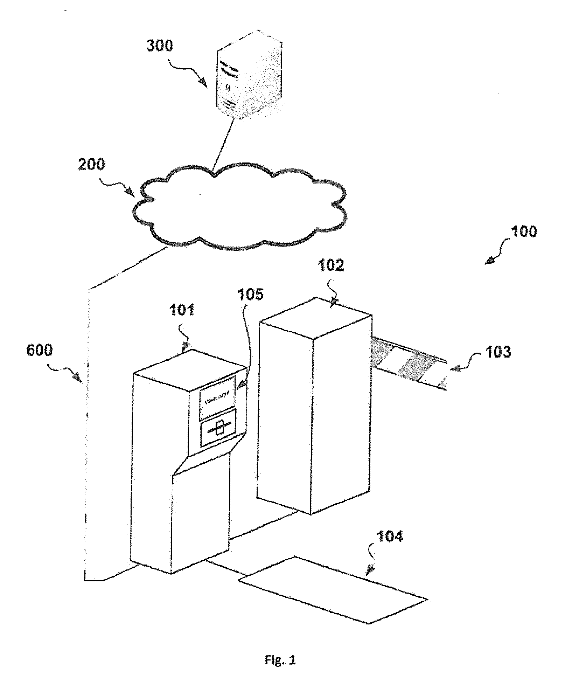

- Figur 1:: Systemkomponenten im Bereich der Einfahrt der Parkeinrichtung,

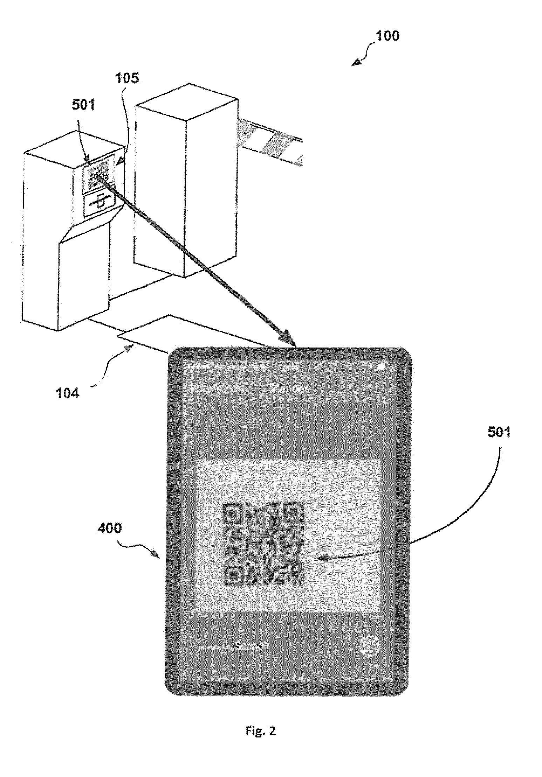

- Figur 2:: Auslesen einer Einfahrtkennung mittels eines mobilen Endgerätes,

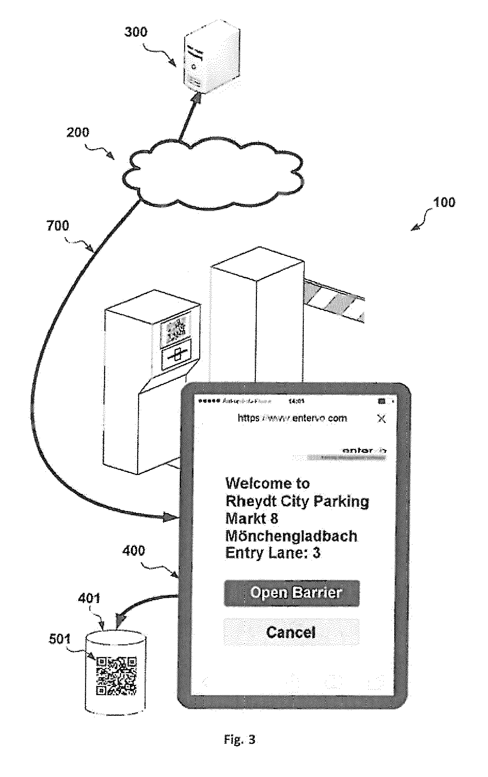

- Figur 3:: Bestätigen der Aktion "Schranke öffnen" von dem mobilen Endgerät an ein Hintergrundsystem,

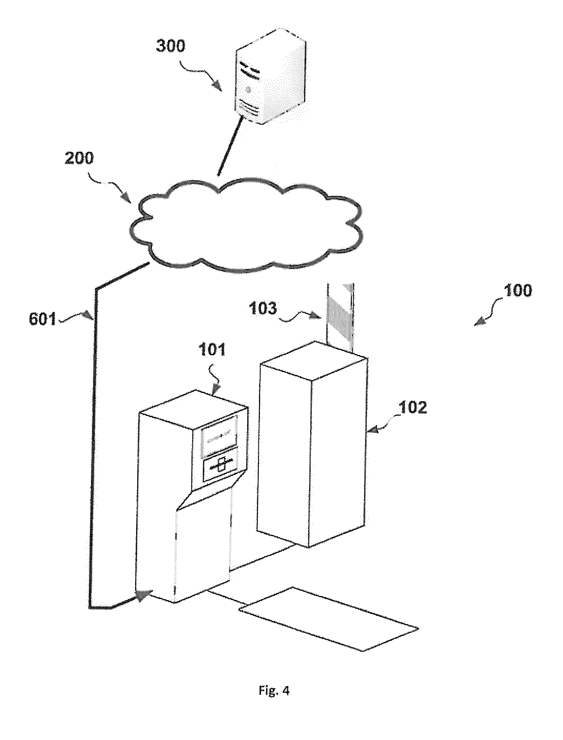

- Figur 4:: Öffnen der Einfahrtschranke,

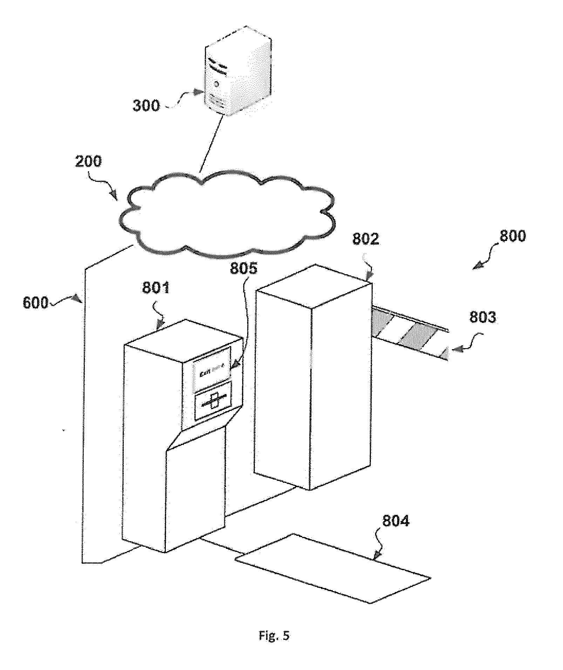

- Figur 5:: Systemkomponenten im Bereich der Ausfahrt der Parkeinrichtung,

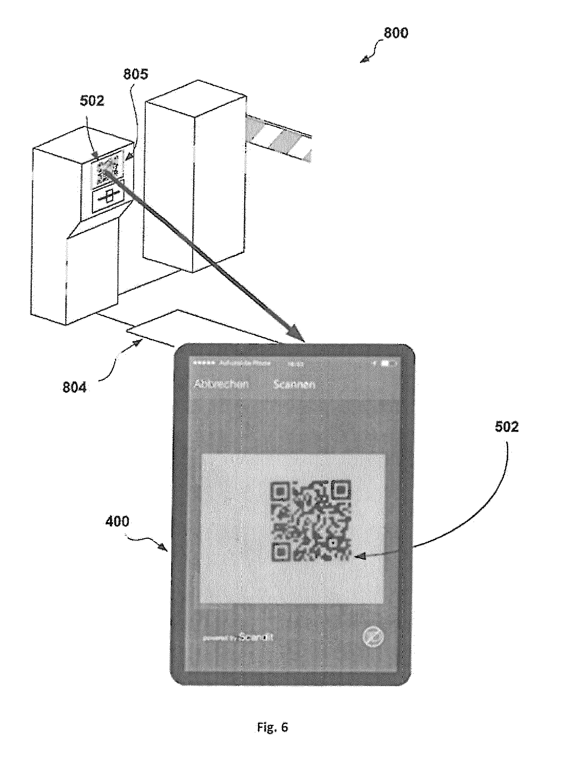

- Figur 6:: Auslesen einer Ausfahrtkennung mittels des mobilen Endgerätes,

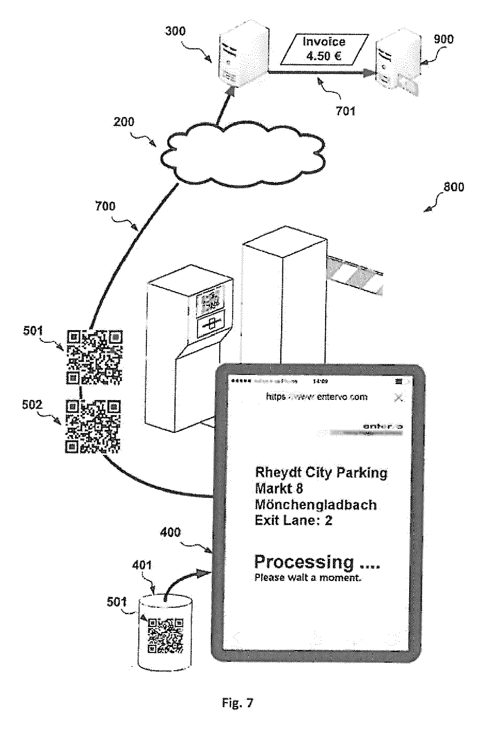

- Figur 7:: Auslesen der Einfahrtkennung und Ausfahrtkennung aus dem mobilen Endgerät und Übermittlung an das Hintergrundsystem sowie Preisberechnung,

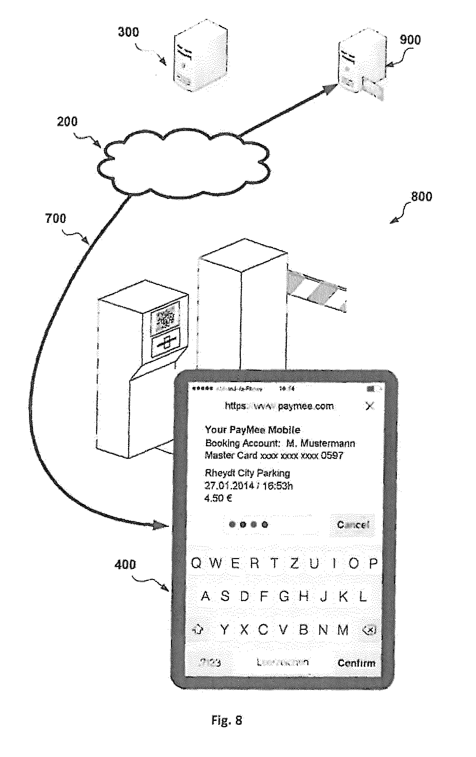

- Figur 8:: Zahlen des berechneten Parkentgeltes mittels des mobilen Endgerätes,

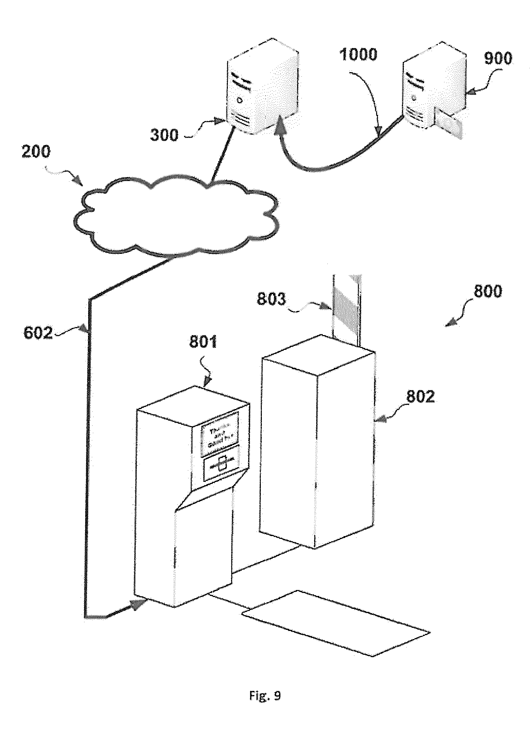

- Figur 9:: Öffnen der Ausfahrtschranke nach Zahlungsbestätigung durch einenZahlungsdienstleister

Figur 1 zeigt eine Einfahrt 100 einer Parkeinrichtung. Die Einfahrt 100 weist eine Kontrolleinrichtung 101 auf, die über eine Datenverbindung mit einem Schrankenantrieb 102 verbunden ist, welcher eine Einfahrtschranke 103 zwischen einer geschlossenen und einer offenen Position verschwenkt. Die Kontrolleinrichtung 101 ist über eine Datenverbindung mit einer Induktionsschleife 104 verbunden, mit deren Hilfe die Kontrolleinrichtung 101 detektiert, ob sich ein Fahrzeug vor der Einfahrtschranke 103 befindet oder nicht. Weiter ist die Kontrolleinrichtung 101 über eine Datenverbindung 600 und ein Netzwerk 200 mit einem Hintergrundsystem 300 verbunden. Die Kontrolleinrichtung 101 weist eine Anzeigeeinheit 105 auf, die sowohl Mitteilungen für den Nutzer als auch einen QR-Code, einen Barcode oder Ähnliches anzeigen kann.

Figur 2 zeigt die Einfahrt 100 in einer Situation, in welcher ein Fahrzeug (nicht dargestellt) vor der Einfahrtschranke 103 steht. Das Fahrzeug wird von der Induktionsschleife 104 detektiert und die Anwesenheit wird der Einfahrtkontrolleinrichtung 101 mitgeteilt. Auf der Anzeigeeinheit 105 der Einfahrtkontrolleinrichtung 101 erscheint daraufhin eine Einfahrtkennung 501. Der Nutzer, das heißt der Fahrer des zu parkenden Fahrzeugs, scannt die Einfahrtkennung 501, das heißt hier einen QR-Code, mittels seines mobilen Endgerätes (Smartphone) 400 berührungslos ein. Dazu verwendet der Nutzer eine beliebige dafür geeignete QR-Scannerapplikation auf seinem mobilen Endgerät 400.

Die Einfahrtkennung 501 wird dynamisch generiert und angezeigt, sobald die Induktionsschleife 104 die Anwesenheit eines Fahrzeugs detektiert. Die Einfahrtkennung 501 enthält das Einfahrtdatum, die Einfahrtuhrzeit, eine eineindeutige Kennung der Parkeinrichtung sowie der Einfahrt und einen Hyperlink auf ein Webportal des Hintergrundsystems 300.

Figur 3 zeigt den nächsten Schritt nach dem Einscannen der Einfahrtkennung 501. Ausgelöst von dem Scanvorgang und dem Hyperlink in der Einfahrtkennung 501 wird auf dem mobilen Endgerät 400 ein Internetbrowser geöffnet, welcher über eine mobile Datenverbindung 700 das mobile Endgerät 400 mit dem Hintergrundsystem 300 verbindet. Aus den Daten der Einfahrtkennung 501 schließt das Hintergrundsystem 300 auf den Standort des mobilen Endgerätes 400 (Parkeinrichtung und Nummer der Einfahrt 100) und zeigt diese im Browser an. Der Nutzer bestätigt, dass er in die Parkeinrichtung einfahren möchte, indem er im Browser seines mobilen Endgerätes 400 das Öffnen der Einfahrtschranke 103 bestätigt.

Die Daten aus der Einfahrtkennung 501 werden als sogenanntes Entity-Tag (eTag) in einem Speicher 401 des mobilen Endgerätes 400 gespeichert. Das eTag (mit den Daten der Einfahrtkennung 501) ist dem Browser des mobilen Endgerätes 400 zugeordnet und auch zu einem späteren Zeitpunkt im Browser abrufbar.

Figur 4 zeigt das Öffnen der Einfahrtschranke 103 für das Fahrzeug des Nutzers. Das Hintergrundsystem 300 veranlasst über eine Datenverbindung 601 und die Einfahrtkontrolleinrichtung 101 das Öffnen genau der Einfahrtschranke 103, von der zuvor die Einfahrtkennung 501 gescannt wurde.

Figur 5 zeigt den Bereich einer Ausfahrt 800 der Parkeinrichtung. Die Ausfahrt 800 weist eine Ausfahrtkontrolleinrichtung 801 auf, welche über eine Datenverbindung mit einem Schrankenantrieb 802 verbunden ist. Der Schrankenantrieb 802 verschwenkt eine Ausfahrtschranke 803 zwischen einer geschlossenen und einer offenen Position. Die Ausfahrtkontrolieinrichtung 801 ist mittels einer Datenverbindung mit einer Induktionsschleife 804 verbunden, mit deren Hilfe die Ausfahrtkontrolleinrichtung 801 detektiert, ob sich ein Fahrzeug vor der Ausfahrtschranke 803 befindet oder nicht. Darüber hinaus ist die Ausfahrtkontrolleinrichtung 801 über eine Datenverbindung 600 und ein Netzwerk 200 mit dem Hintergrundsystem 300 verbunden. Die Ausfahrtkontrolleinrichtung 801 weist darüber hinaus eine Anzeigeeinheit 805 auf, die sowohl Mitteilungen für den Nutzer als auch Ausfahrtkennungen 502 anzeigen kann.

In Figur 6 ist eine Situation dargestellt, in welcher sich ein Fahrzeug vor der Ausfahrtschranke 803 befindet. Analog zur Vorgehensweise bei der Einfahrt wird das Fahrzeug von der Induktionsschleife 804 detektiert. Die Anwesenheit des Fahrzeugs wird der Ausfahrtkontrolleinrichtung 801 mitgeteilt. Auf der Anzeigeeinheit 805 der Ausfahrtkontrolleinrichtung 801 erscheint daraufhin eine Ausfahrtkennung 502 (hier ein QR-Code). Der Nutzer scannt die Ausfahrtkennung 502 mittels seines mobilen Endgerätes 400 berührungslos ein. Dazu verwendet der Nutzer eine beliebige QR-Scannerapplikation, welche auf seinem mobilen Endgerät 400 installiert ist.

Die Ausfahrtkennung 502 wird dynamisch generiert und angezeigt, sobald die Induktionsschleife 804 die Anwesenheit eines Fahrzeugs feststellt. Die Ausfahrtkennung 502 enthält einen variablen Dateninhalt, welcher das Ausfahrtsdatum, die Ausfahrtuhrzeit, eine eineindeutige Identifizierung für die Parkeinrichtung und die verwendete Ausfahrt 800 sowie einen Hyperlink auf das Webportal des Hintergrundsystems 300 umfasst.

Figur 7 zeigt den auf das Einscannen der Ausfahrtkennung 502 folgenden Schritt. Ausgelöst durch den Scanvorgang und den in der Ausfahrtkennung 502 enthaltenen Hyperlink wird auf dem mobilen Endgerät 400 ein Internetbrowser geöffnet, der über eine mobile Datenverbindung 700 das mobile Endgerät 400 mit dem Hintergrundsystem 300 verbindet. Anhand des Dateninhalts der Ausfahrtkennung 502 erkennt das Hintergrundsystem 300 den Standort des mobilen Endgerätes 400 (Parkeinrichtung und Nummer der Ausfahrt 800) und zeigt diese im Browser an.

Darüber hinaus werden die Daten der Einfahrtkennung 501, welche seit dem Zeitpunkt des Einfahrens in die Parkeinrichtung als eTag im Speicher 401 des mobilen Endgerätes 400 gespeichert sind, von dem Hintergrundsystem 300 abgerufen, mittels des Browsers aus dem Speicher 401 des mobilen Endgerätes 400 ausgelesen und an das Hintergrundsystem 300 übermittelt. Das Hintergrundsystem 300 hat nun die Daten aus der Einfahrtkennung 501 und aus der Ausfahrtkennung 502 vorliegen, berechnet daraus das zu entrichtende Parkentgelt für den Parkvorgang und leitet eine Information über die Höhe des Parkentgeltes über eine Datenleitung 701 an den Server des Zahlungsdienstleisters 900 weiter. Dabei wird die Internetverbindung des auf dem mobilen Endgerätes 400 installierten Browsers über eine URL-Redirect-Funktion weitergeleitet. Es ist möglich, dass die Ermittlung des Parkentgeltes und die Weiterleitung dieser Information durch das Hintergrundsystem 300 so schnell orfolgt, dass das in Figur 7 gezeigte Browserfenster für den Nutzer gar nicht oder nur sehr kurz zu sehen ist und der Nutzer unmittelbar die in Figur 8 dargestellte Anzeige auf seinem mobilen Endgerät 400 erhält. Diese Anzeige beinhaltet ein Feld für eine Zahlungsbestätigung.

Figur 8 zeigt den anschließenden Zahlungsschritt. Die im vorausgehenden Schritt im Hintergrundsystem 300 ermittelte Information über das Parkentgelt ist an den Server des Zahlungsdienstleisters 900 weitergeleitet worden. Ebenso ist die Internetverbindung des Browsers des mobilen Endgerätes 400 über eine URL-Redirect-Funktion auf den Server des Zahlungsdienstleisters 900 weitergeleitet worden. Das mobile Endgerät 400 steht nun in einer Datenverbindung 700 mit dem Server des Zahlungsdienstleisters 900, um den Zahlungsvorgang zu bestätigen. Der Ablauf der Bestätigung ist abhängig von den Verfahren des jeweiligen Zahlungsdienstleisters 900. In Figur 8 ist lediglich beispielhaft angenommen, dass der Nutzer die Zahlung durch Eingabe eines Passwortes bestätigt. Es sind alternativ aber auch andere Arten der Bestätigung möglich, wie zum Beispiel eine einfache Bestätigung durch das Drücken einer "Ok"-Taste.

Figur 9 zeigt den abschließenden Schritt des Ausfahrens aus der Parkeinrichtung. Der Server des Zahlungsdienstleisters 900 teilt dem Hintergrundsystem 300 über eine Datenverbindung 1000 eine Zahlungsbestätigung mit. Das Hintergrundsystem 300 veranfasst anschließend über eine Datenverbindung 602, dass genau die Ausfahrtschranke 803, von der zuvor die Ausfahrtkennung 502 gescannt wurde, für den Nutzer geöffnet wird.

**Bezugszeichenliste**

| | | | |
|---|---|---|---|
| 100 | Einfahrt | 800 | Ausfahrt |
| 101 | Einfahrtkontrolleinrichtung | 801 | Ausfahrtkontrolleinrichtung |
| 102 | Schrankenantrieb | 802 | Schrankenantrieb |
| 103 | Einfahrtschranke | 803 | Ausfahrtschranke |
| 104 | Induktionsschleife | 804 | Induktionsschleife |
| 105 | Anzeigeeinheit | 805 | Anzeigeeinheit |
| 200 | Netzwerk | 900 | Zahlungsdienstleister |
| 300 | Hintergrundsystem | 1000 | Datenverbindung |
| 400 | mobiles Endgerät | | |
| 401 | Speicher | | |
| 501 | Einfahrtkennung | | |
| 502 | Ausfahrtkennung | | |
| 600 | Datenverbindung | | |
| 601 | Datenverbindung | | |
| 602 | Datenverbindung | | |
| 700 | Datenverbindung | | |
| 701 | Datenverbindung | | |

## Patentansprüche

1. Verfahren zur Erfassung und Bezahlung von Parkvorgängen in Parkeinrichtungen,
- wobei ein Nutzer beim Einfahren in und Ausfahren aus der Parkeinrichtung eine Einfahrtkennung (501) bzw. Ausfahrtkennung (502) mittels eines mobilen Endgerätes (400) von einer der Einfahrt (100) bzw. Ausfahrt (800) zugeordneten Einfahrtkontrolleinrichtung (101) bzw. Ausfahrtkontrolleinrichtung (801) ausliest,
- wobei die Einfahrtkennung (501) in einem Speicher (401) des mobilen Endgerätes (400) gespeichert und/oder gemeinsam mit einer Kennung des mobilen Endgerätes (400) an das Hintergrundsystem (300) übermittelt wird,
- wobei beim Ausfahren die Einfahrtkennung (501) und Ausfahrtkennung (502) oder die Kennung des mobilen Endgerätes (400) und die Ausfahrtkennung (502) von dem mobilen Endgerät (400) an das Hintergrundsystem (300) übermittelt werden, und
- wobei das Hintergrundsystem (300) anhand der Einfahrtkennung (501) und Ausfahrtkennung (502) eine Entgeltberechnung für den Parkvorgang durchführt.

2. Verfahren nach Anspruch 1, **dadurch gekennzeichnet, dass** die Einfahrtkennung (501) und/oder Ausfahrtkennung (502) einen QR-Code oder Barcode aufweist.

3. Verfahren nach Anspruch 1 oder 2, **dadurch gekennzeichnet, dass** die Einfahrtkennung (501) und/oder Ausfahrtkennung (502) variablen Dateninhalt aufweist.

4. Verfahren nach einem der vorhergehenden Ansprüche, **dadurch gekennzeichnet, dass** die Einfahrtkennung (501) und/oder Ausfahrtkennung (502) ein Datum und/oder eine Uhrzeit und/oder eine Kennung der Parkeinrichtung und/oder eine Kennung einer Ein- oder Ausfahrt (100, 800) der Parkeinrichtung und/oder einen Hyperlink auf ein Webportal des Hintergrundsystems (300) aufweist.

5. Verfahren nach einem der vorhergehenden Ansprüche, **dadurch gekennzeichnet, dass** die Einfahrtkennung (501) und/oder Ausfahrtkennung (502) in der
Einfahrtkontrolleinrichtung (101) bzw. Ausfahrtkontrolleinrichtung (801) generiert wird.

6. Verfahren nach Anspruch 5, **dadurch gekennzeichnet, dass** die Einfahrtkennung (501) und/oder Ausfahrtkennung (502) generiert wird, wenn eine Anwesenheit eines Kraftfahrzeugs im Bereich der Einfahrtkontrolleinrichtung (101) bzw. Ausfahrtkontrolleinrichtung (801) detektiert wird.

7. Verfahren nach einem der vorhergehenden Ansprüche, **dadurch gekennzeichnet, dass** das Hintergrundsystem (300) eine Information über das berechnete Parkentgelt an einen Zahlungsdienstleister (900) übermittelt.

8. Verfahren nach Anspruch 7, **dadurch gekennzeichnet, dass** der Nutzer mittels seines mobilen Endgerätes (400) auf einem Webportal des Zahlungsdienstleisters (900) eine Zahlung des Parkentgeltes veranlasst.

9. Verfahren nach Anspruch 7 oder 8, **dadurch gekennzeichnet, dass** der Zahlungsdienstleister (900) eine Zahlungsbestätigung (1000) an das Hintergrundsystem (300) übermittelt.

10. Verfahren nach einem der vorhergehenden Ansprüche, **dadurch gekennzeichnet, dass** dem Nutzer Mitteilungen auf einer Anzeigeeinheit (805) der Einfahrtkontrolleinrichtung (101) bzw. Ausfahrtkontrolleinrichtung (801) angezeigt werden.

11. Verfahren nach einem der vorhergehenden Ansprüche, **dadurch gekennzeichnet, dass** durch das Auslesen eines in der Einfahrtkennung (501) bzw. Ausfahrtkennung (502) enthaltenen Hyperlinks eine Datenverbindung (700, 701) zwischen dem mobilen Endgerät (400) und dem Hintergrundsystem (300) oder zwischen dem mobilen Endgerät (400) und einem Zahlungsdienstleister (900) hergestellt wird.

12. Verfahren nach Anspruch 11, **dadurch gekennzeichnet, dass** die Datenverbindung (700, 701) mittels eines Internetbrowsers oder einer Applikation des mobilen Endgerätes (400) hergestellt wird.

## Geänderte Patentansprüche

### Geänderte Patentansprüche gemäss Regel 137(2) EPÜ.

1. Verfahren zur Erfassung und Bezahlung von Parkvorgängen in Parkeinrichtungen,
- wobei ein Nutzer beim Einfahren in und Ausfahren aus der Parkeinrichtung eine Einfahrtkennung (501) bzw. Ausfahrtkennung (502) mittels eines mobilen Endgerätes (400) von einer der Einfahrt (100) bzw. Ausfahrt (800) zugeordneten Einfahrtkontrolleinrichtung (101) bzw. Ausfahrtkontrolleinrichtung (801) ausliest,
- wobei die Einfahrtkennung (501) in einem Speicher (401) des mobilen Endgerätes (400) gespeichert und/oder gemeinsam mit einer Kennung des mobilen Endgerätes (400) an das Hintergrundsystem (300) übermittelt wird,
- wobei beim Ausfahren die Einfahrtkennung (501) und Ausfahrtkennung (502) oder die Kennung des mobilen Endgerätes (400) und die Ausfahrtkennung (502) von dem mobilen Endgerät (400) an das Hintergrundsystem (300) übermittelt werden, und
- wobei das Hintergrundsystem (300) ausschließlich anhand von Daten der Einfahrtkennung (501) und der Ausfahrtkennung (502) eine Berechnung der Parkdauer und darauf basierend eine Entgeltberechnung für den Parkvorgang durchführt.

2. Verfahren nach Anspruch 1, **dadurch gekennzeichnet, dass** die Einfahrtkennung (501) und/oder Ausfahrtkennung (502) einen QR-Code oder Barcode aufweist.

3. Verfahren nach Anspruch 1 oder 2, **dadurch gekennzeichnet, dass** die Einfahrtkennung (501) und/oder Ausfahrtkennung (502) variablen Dateninhalt aufweist.

4. Verfahren nach einem der vorhergehenden Ansprüche, **dadurch gekennzeichnet, dass** die Einfahrtkennung (501) und/oder Ausfahrtkennung (502) ein Datum und/oder eine Uhrzeit und/oder eine Kennung der Parkeinrichtung und/oder eine Kennung einer Ein- oder Ausfahrt (100, 800) der Parkeinrichtung und/oder einen Hyperlink auf ein Webportal des Hintergrundsystems (300) aufweist.

5. Verfahren nach einem der vorhergehenden Ansprüche, **dadurch gekennzeichnet, dass** die Einfahrtkennung (501) und/oder Ausfahrtkennung (502) in der Einfahrtkontrolleinrichtung (101) bzw. Ausfahrtkontrolleinrichtung (801) generiert wird.

6. Verfahren nach Anspruch 5, **dadurch gekennzeichnet, dass** die Einfahrtkennung (501) und/oder Ausfahrtkennung (502) generiert wird, wenn eine Anwesenheit eines Kraftfahrzeugs im Bereich der Einfahrtkontrolleinrichtung (101) bzw. Ausfahrtkontrolleinrichtung (801) detektiert wird.

7. Verfahren nach einem der vorhergehenden Ansprüche, **dadurch gekennzeichnet, dass** das Hintergrundsystem (300) eine Information über das berechnete Parkentgelt an einen Zahlungsdienstleister (900) übermittelt.

8. Verfahren nach Anspruch 7, **dadurch gekennzeichnet, dass** der Nutzer mittels seines mobilen Endgerätes (400) auf einem Webportal des Zahlungsdienstleisters (900) eine Zahlung des Parkentgeltes veranlasst.

9. Verfahren nach Anspruch 7 oder 8, **dadurch gekennzeichnet, dass** der Zahlungsdienstleister (900) eine Zahlungsbestätigung (1000) an das Hintergrundsystem (300) übermittelt.

10. Verfahren nach einem der vorhergehenden Ansprüche, **dadurch gekennzeichnet, dass** dem Nutzer Mitteilungen auf einer Anzeigeeinheit (805) der Einfahrtkontrolleinrichtung (101) bzw. Ausfahrtkontrolleinrichtung (801) angezeigt werden.

11. Verfahren nach einem der vorhergehenden Ansprüche, **dadurch gekennzeichnet, dass** durch das Auslesen eines in der Einfahrtkennung (501) bzw. Ausfahrtkennung (502) enthaltenen Hyperlinks eine Datenverbindung (700, 701) zwischen dem mobilen Endgerät (400) und dem Hintergrundsystem (300) oder zwischen dem mobilen Endgerät (400) und einem Zahlungsdienstleister (900) hergestellt wird.

12. Verfahren nach Anspruch 11, **dadurch gekennzeichnet, dass** die Datenverbindung (700, 701) mittels eines Internetbrowsers oder einer Applikation des mobilen Endgerätes (400) hergestellt wird.
